# EUROPÄISCHE PATENTANMELDUNG

(11) **EP 1 231 237 A1**
(43) Veröffentlichungstag der Anmeldung: **14.08.2002**
(21) Anmeldenummer: 02001037.7
(22) Anmeldetag: 18.01.2002
(51) Int. Cl.: C08K 9/02, C08K 7/16, C08K 7/22

(54) **Glanzpigmente und Füllkörper enthaltendes Kunststoffteil**

(30) Priorität: 10.02.2001 DE 10106198
(71) Anmelder: MERCK PATENT GmbH, 64293 Darmstadt (DE)
(72) Erfinder: Brehm, Hans-Jürgen, 64678 Lindenfels (DE); Kieser, Manfred, Dr., 64291 Darmstadt (DE); Aust, Emil, Dr., 55130 Mainz (DE)

(57) **Zusammenfassung**

Kunststoffteil enthaltend Glanzpigmente aus überwiegend flächig ausgebildeten und ausgerichteten, metallischen oder stark lichtbrechenden Pigmentteilchen oder -plättchen und einem Füllkörper, wobei der Füllkörper aus hohlen oder kompakten Teilchen besteht, die eine weitgehend isometrische Körperform aufweisen und einen Durchmesser zwischen 10 und 200 µm besitzen. Derartige Formteile zeigen einen ausgeprägten Glitzereffekt.

## Beschreibung

Die Erfindung betrifft ein Kunststoffteil, das Glanzpigmente, Füllkörper und die für die Kunststoffverarbeitung üblichen Hilfsstoffe, wie Pigmente, Stabilisatoren, Weichmacher, Füllstoffe und Verstärkungsmittel enthalten kann. Derartige Kunststoffteile zeigen einen ausgeprägten Glitzereffekt.

Unter Glanzpigmente sind solche Pigmente zu verstehen, bei denen durch gerichtete Reflexionen an überwiegend flächig ausgebildeten und ausgerichteten, metallischen oder stark lichtbrechenden Pigmentteilchen Glanzeffekte entstehen. Dazu gehören auch Perlglanzpigmente, bei denen es sich um Glanzpigmente handelt, die aus farblosen, transparenten und hochlichtbrechenden Plättchen bestehen. Durch parallele Orientierung von Perlglanzpigmenten in Kunststoffen oder in Lacken wird durch Mehrfachreflexionen ein weicher Glanzeffekt bewirkt, der als Perlglanz bezeichnet wird. Perlglanzpigmente mit einer bestimmten Schichtdicke können die Interferenzbedingungen erfüllen und zeigen dann irisierende Farben. Daher der Name "Interferenzpigmente". Dabei ist der Farbton vom Betrachtungswinkel abhängig. Ein weiteres Merkmal dieser transparenten Interferenzpigmente besteht darin, dass in Aufsicht und Durchsicht komplementäre Farben zu sehen sind Daneben gibt es auch Interferenzpigmente mit nichttransparenten Trägermaterialien, bei denen nur die Farbe in der Aufsicht zu sehen ist.

Ebenfalls zu den Glanzpigmenten gehören die handelsüblichen Metalleffektpigmente, wie beispielsweise Aluminiumplättchen, die goniochromatischen Glanzpigmente, basierend auf silicalischen Plättchen, Aluminiumplättchen oder Eisenoxidplättchen als Trägermaterial und die Flüssigkristallpigmente.

Glanzpigmente müssen nach dem Stand der Technik eine gewisse Teilchengröße besitzen, damit sie für das Auge einen Glitzereffekt ergeben. Tritt dieser Fall auf, ist das Auge in der Lage ein einzelnes Pigmentplättchen als ein konkretes Teilchen zu erkennen. Da das Auflösungsvermögen des Auges sehr stark durch den Kontrast der aufzulösenden Strukturen beeinflußt wird, kann eine konkrete Teilchengröße nicht angegeben werden, bei der sich ein Glitzereffekt ergibt. Allgemein gilt, dass Glanzpigmente mit einer Teilchengröße kleiner 25 µm einen seidenmatten bis seidenglänzenden Glanz ergeben. Bei Teilchengrößen bis ca. 60 µm wird ein leicht strukturierter Glanz beobachtet, jedoch kann in diesem Fall noch nicht von einem Glitzern gesprochen werden. Glitzereffekte sind erst bei Teilchengrößen ab 80 bis 100 µm zu beobachten. Teilchen dieser Größe sind jedoch nicht immer herstellbar, so können beispielsweise Einkristalle von basischem Bleikarbonat oder BiOCI oder Al₂O₃-Plättchen als Träger für Schicht-Substrat-Pigmente in solchen Größenordnungen nur schwierig hergestellt werden. Bei Glimmerpigmenten ist die Herstellung von größeren Teilchen weniger problematisch und derartige Pigmente sind auch auf dem Markt erhältlich.

Die bekannten Glanzpigmente einschließlich der Perlglanzpigmente ergeben in Anwendungssystemen, beispielsweise Kunststoffen, aufgrund ihrer begrenzten Teilchengröße Glanzeffekte, nicht jedoch Glitzereffekte.

Es ist daher Aufgabe der Erfindung, Kunststoffteile bereitzustellen, bei denen Glanzpigmente eingesetzt werden, die Glitzereffekte bewirken, obwohl sie üblicherweise aufgrund ihrer Teilchengröße nur Glanzeffekte erzeugen oder die den Glitzereffekt bei Pigmenten, die bereits diesen Effekt zeigen, verstärken.

Diese Aufgabe wird gelöst, indem dem Kunststoff vor der Verarbeitung außer dem Glanzpigment Füllkörper zugesetzt werden, die eine weitgehende isometrische Körperform aufweisen, wobei der Durchmesser dieser Füllkörper im Bereich von 10 bis 200 µm liegt. Daneben können auch die in der Kunststoffverarbeitung üblichen Hilfsstoffe enthalten sein, die im "Taschenbuch der Kunststoff-Additive; Stabilisatoren, Hilfsstoffe, Weichmacher, Füllstoffe, Verstärkungsmittel. Farbmittel", 2. Ausgabe, Carl Hauser Verlag München Wien, ausführlich beschrieben sind.

Gegenstand der Erfindung ist somit ein Kunststoffteil, das Glanzpigmente aus überwiegend flächig ausgebildeten und ausgerichteten, metallischen oder stark lichtbrechenden Pigmentteilchen oder -plättchen und einen Füllkörper enthält, wobei der Füllkörper aus hohlen oder kompakten Teilchen besteht, die eine weitgehend isometrische Körperform aufweisen und einen Durchmesser zwischen 10 und 200µm besitzen.

Als Füllkörper werden insbesondere kleine transparente Kügelchen verwendet, die hohl oder kompakt sind. Abweichungen von der idealen Kugelform sind möglich, jedoch sollte es sich vorwiegend um nahezu isometrische Formen der Füllkörper handeln. Darunter ist zu verstehen, dass die Abmessungen der Teilchen in alle drei Raumrichtungen etwa gleich sind. Die Oberfläche der Füllkörper ist bevorzugt glatt. Bei rauhen Oberflächen der Körper, wie sie beispielsweise bei gemahlenen Füllkörpern auftreten, wird zwar auch ein grober Glitzereffekt beobachtet, jedoch mit etwas reduzierter Brillanz der Farben. Bevorzugte Füllstoffe sind Glaskugeln oder Hohlglaskugeln der Firma Minnesota Mining Manufacturing. Die Brechzahl des Füllkörpermaterials soll in etwa gleich der Brechzahl des Matrixmaterials größenmäßig entsprechen, in das die Füllkörper und Glanzpigmente eingebracht werden, um die Transparenz und damit den Glanz des pigmentierten Matrixmaterials nicht zu sehr zu beeinträchtigen. Wesentlich sind jedoch Form und Oberfläche der Füllkörper. Von geringerer Bedeutung ist das Material, aus dem die Füllkörper hergestellt sind.

Die wesentliche Größe bei der Auswahl der Füllkörper ist der Teilchendurchmesser der Füllkörper. Dieser liegt zwischen 10 und 200 µm, wobei bevorzugte Teilchendurchmesser zwischen 15 und 150 µm, insbesondere zwischen 20 und 120 µm liegen. Die Menge der Füllkörper beträgt 0,2 bis 10 Masseanteile, vorzugsweise 0,5 bis 5 Masseanteile und insbesondere 0,5 bis 3 Masseanteile an der Gesamtmasse des Kunststoffteiles.

Als Glanzpigmente können alle einschlägig bekannten plättchenförmigen Pigmente, wie Metalleffektpigmente, goniochromatische Glanzpigmente, Interferenzpigmente, Perlglanzpigmente und Flüssigkristallpigmente eingesetzt werden.

Metalleffektpigmente bestehen aus Plättchen der Metalle Aluminium, Kupfer, Zink, Zinn und ihren Legierungen, insbesondere Aluminium- und Goldbronzelegierungen. Die Oberfläche der Metallplättchen ist passiviert oder mit einer Schutzschicht, z.B. aus Metalloxiden, versehen. Metalleffektpigmente werden von der Firma Eckart unter dem Handelsnamen Standard® vertrieben.

Goniochromatische Glanzpigmente bestehen aus mehrfach beschichteten plättchenförmigen metallischen Substraten, transparenten nichtmetallischen Substraten oder mehrfach beschichteten Metalloxidplättchen. Als metallisches Substrat werden Aluminiumplättchen, als transparentes nichtmetallisches Substrat Glimmer und als Metalloxidplättchen Eisenoxid eingesetzt. Diese Glanzpigmente sind in EPO 741 170, EPO 708 154 und EPO 753 545 näher beschrieben. Sie werden unter den Handelsnamen Paliochrom® und Variochrom® von der BASF angeboten.

Mehrschichtige Interferenzpigmente mit einer lichtundurchlässigen Aluminiumschicht als zentraler Schicht werden unter den Handelsnamen Chromaflair® und OVP® (optical variable pigments) von der Firma Flex hergestellt. Grundsätzlich besitzen diese Pigmente, die in erster Linie im Sicherheitsdruck eingesetzt werden, eine fünfschichtige Struktur. Auf eine zentrale lichtundurchlässige Aluminiumschicht sind auf beiden Seiten Schichten aus Magnesiumfluorid als Zwischenschichten und darauffolgend halbdurchlässige Chromschichten als äußere Schichten abgeschieden. Die Pigmente sind in US 4 434 010 beschrieben.

Interferenzpigmente mit transparenten Trägermaterialien werden als Perlglanzpigmente bezeichnet. Die plättchenförmigen transparenten Trägermaterialien können Glimmer, andere Schichtsilikate wie Talkum oder Kaolin, Glas-Flakes, SiO₂-Flakes, TiO₂-Flakes oder Al₂O₃-Flakes sein. Diese Trägermaterialien sind mit einer oder mehreren Metalloxidschichten überzogen. Als Metalloxide werden dabei sowohl farblose hochbrechende Metalloxide wie beispielsweise Titandioxid oder Zirkoniumoxid, farblose niedrigbrechende Metalloxide wie beispielsweise Siliziumdioxid oder Aluminiumoxid als auch farbige Metalloxide, wie z.B. Chromoxid, Kobaltoxid und insbesondere Eisenoxide verwendet. Diese plättchenförmigen Perlglanzpigmente sind bekannt und größtenteils kommerziell erhältlich. Perlglanzpigmente sind beispielsweise in den deutschen Patenten 31 37 808, 31 37 809, 31 51 343, 31 51 354, 31 51 355, 32 11 602 und 32 35 017 beschrieben. Diese Pigmente werden unter den Handelsnamen Iriodin®, Colorstream® und Xirallic® von der Merck KGaA angeboten.

Flüssigkristallpigmente sind Interferenzpigmente auf der Basis von flüssigkristallinen Polymeren. Die einzelnen Pigmentteilchen sind Bruchstücke einer dünnen vernetzten Folie aus flüssigkristallinen Polymeren. Die mit ihnen erzielbaren Farbeffekte beruhen auf der regelmäßigen Struktur und der gleichmäßigen Anordnung der Moleküle in Form eines Flüssigkristalls und auf einer darauf zurückzuführenden Interferenz eines bestimmten spektralen Lichtanteiles, den das Pigment reflektiert. Die anderen Lichtanteile gehen durch das Pigment hindurch.

Flüssigkristalline Interferenzpigmente werden in US 5 807 497 und US 5 824 733 beschrieben. Sie werden von der Wacker-Chemie GmbH unter dem Handelsnamen HELICONE® HC angeboten.

Der Durchmesser der Teilchen der erfindungsgemäß eingesetzten, nicht glitzernden Glanzpigmente liegt im Bereich von 2 bis 80 µm. Die Pigmente können einzeln oder als Pigmentgemisch verwendet werden. Ebenso können Pigment und Füllkörper als einzelne Komponenten oder als Gemisch dem Matrixmaterial, z.B. einem Kunststoffgranulat, zugesetzt werden. Die Reihenfolge der Zugabe der beiden Komponenten ist unkritisch.

Glanzpigmente werden in Kunststoffen im allgemeinen in Konzentrationen von 0,5-2 Gew.-% eingesetzt. In Folien oder dünnen Schichten werden auch deutlich höhere Konzentrationen benötigt. Entscheidend für die notwendige Pigmentkonzentration ist immer der gewünschte Effekt.

Durch den Zusatz von Füllkörpern zu den Glanzpigmenten werden diese aus ihrer mehr oder weniger idealen, zur Oberfläche parallelen Ausrichtung ausgelenkt. Es kommt dabei zu einem gewissen Verkanten der Pigmente gegeneinander, wodurch der visuelle Eindruck von einzelnen Teilchen mit größeren Teilchendurchmessern als den tatsächlichen Teilchendurchmessern entspricht, entsteht. Dieser visuelle Eindruck führt zu einer scheinbaren Vergröberung der Oberfläche der gegeneinander verkanteten Pigmentteilchen und es tritt ein Glitzereffekt auf, der in einem viel größeren Betrachtungswinkelbereich zu beobachten ist als ein mit grobteiligen Glanzpigmenten erzielbarer Glitzereffekt.

Darüber hinaus werden auch die Effekte der Pigmente, die größer als 80 µm sind, beeinflusst, d.h. verstärkt. Bei Glanzpigmenten, die auf Grund ihrer Teilchengröße bereits einen Glitzereffekt zeigen, wird dieser verstärkt und ebenfalls in einem größeren Winkelbereich sichtbar.

Durch den Einsatz der Füllkörper zusammen mit stark changierenden Interferenzpigmenten, wie sie beispielsweise unter dem Handelsnamen "Colorstream®", hergestellt von der Fa. Merck KGaA, erhältlich sind, wird die Winkelabhängigkeit des Farbwechsels (Flop) verringert. Der Übergang von einer Farbe zu einer anderen Farbe wird weicher, d. h. der Winkelbereich innerhalb dem sich die Farbe ändert, wird größer.

Der Einsatz der Füllkörper kann im Kunststoffteil gegebenenfalls die Sichtbarkeit von Fließlinien und Bindenähten graduell vermindern.

Für das erfindungsgemäße Kunststoffteil können bekannte, transparente, insbesondere thermoplastische Kunststoffe eingesetzt werden. Geeignete Kunststoffe sind z.B. Polyethylen (PE), Polypropylen (PP), Polystyrol (PS), Polyphenylenoxid, Polyacetal, Polybutylenterephthalat, Polymethylmethacrylat, Polyvinylacetat, Acrylnitril-Butadien-Styrol (ABS), Acrylnitril-Styrol-Acrylester (ASA), Polykarbonat, Polyethersulfon, Polyetherketone und ihre Copolymeren und/oder deren Mischungen. Darüber hinaus können auch Gießharze, z.B. ungesättigte Polyester- und Methylmethacrylat-Gießharze verwendet werden. Die Einarbeitung der Komponenten in den Grundstoff erfolgt auf die übliche Art und Weise. Bei der sogenannten Direkteinfärbung wird das Kunststoffgranulat an der Oberfläche mit Haftmittel, z.B. Diisooctylphthalat, gleichmäßig benetzt, danach die Glanzpigmente und Füllkörper zugegeben und durch Mischen gleichmäßig auf der Oberfläche des Kunststoffgranulats verteilt. Diese Mischung wird dann direkt in einer Spritzgießmaschine verarbeitet. Die erhaltenen Formkörper zeigen eine sehr homogene Verteilung der Glanzpigmente.

Die Direkteinfärbung ist ein Verfahren, das bevorzugt im Labor angewendet wird. In der Produktion werden Masterbatches eingesetzt. Als Masterbatch bezeichnet man eine Pigmentpräparation, bei der das Pigment in wesentlich höherer Konzentration als im Endprodukt und in vollständig dispergierter Form in einer Matrix vorliegt, die mit dem Einsatzmaterial verträglich ist. Die Einarbeitung von Glanzpigmenten in Kunststoffe ist in "Perlglanzpigmente", herausgegeben von Dr. Ulrich Zorll, Curt R. Vincentz Verlag, Hannover 1996, ausführlich beschrieben.

Die Einarbeitung von Glanzpigmenten und Füllkörpern in ungesättigte Kunststoffe erfolgt durch Einrühren vor dem (3ießprozess.

Die nachfolgenden Beispiele erläutern die Erfindung, ohne sie zu beschränken. Die Rezepturangaben bezüglich der Glanzpigmente sind in Masseanteilen angegeben.

### Beispiele

### Beispiel 1

978 g PP-Granulat der Handelsmarke Stamylan® PPH 10 der Fa. DSM werden in einem Taumelmischer mit 2 g Diisooctylphthalat an der Oberfläche benetzt und anschließend gut vermischt. Anschließend werden 10 g mit TiO₂ beschichtete Glimmerpigmente der Teilchengröße 5 bis 25 µm der Fa. E. Merck, Darmstadt, Bundesrepublik Deutschland (Iriodin 123 Glanzsatin) und 10 g Füllkörper zugegeben und durch Mischen gleichmäßig auf der Oberfläche des Kunststoffgranulats verteilt. Bei den Füllkörpern handelt es sich um Hohlglaskugeln mit Durchmessern von im wesentlichen zwischen 20 und 80 µm, die unter dem Handelsnamen Scotchlite® K37 der 3M Company, USA erhältlich sind. Das so pigmentierte Kunststoffgranulat wird mittels einer Sprilzgießmaschine zu Formteilen spritzgegossen. Die fertigen Formteile zeigen einen deutlich gröber strukturierten Perlglanz gegenüber dem Vergleichsbeispiel 1, der nicht dem üblichen Erscheinungsbild gemäß der Teilchengröße der eingesetzten Perlglanzpigmente entspricht. Dieser gröber strukturierte Perlglanz stellt einen Glitzereffekt dar. Die Winkelabhängigkeit des Glanzeffektes ist geringer als beim Vergleichsbeispiel. Der Masseanteil des Perlglanzpigmentes und des Füllkörpers an dem Formteil beträgt jeweils 1.

### Beispiel 2

Es werden die gleichen Komponenten wie im Beispiel 1 verwendet, wobei jedoch nur an Stelle der Hohiglaskugeln Scotchlite® K37 Hohlglaskugeln des Typs Scotchlite® K1 der 3M Company, USA verwendet werden. Der Teilchendurchmesser dieser Füllkörper liegt im wesentlichen im Bereich zwischen 30 bis 110 µm. Der visuell zu beobachtende Glitzereffekt entspricht demjenigen im Beispiel 1.

### Beispiel 3

Es werden wie im Beispiel 1 978 g PP-Granulat (Stamylan® PPH10-Granulat) in einem Taumelmischer mit 2 g Diisooctylphthalat an der Oberfläche benetzt und anschließend gut vermischt. Danach werden 10 g eines silberfarbenen Perlglanzpigmentes bestehend aus Al₂O₃ als Substrat und einer Beschichtung aus TiO₂ und 10 g Füllkörper (Hohlglaskugeln Scotchlite® K37 der 3M Company, USA) zugegeben und durch Mischen gleichmäßig auf der Oberfläche des Kunststoffgranulats verteilt. Pigmente mit Al₂O₃ als Substrat sind unter dem Markennamen Xirallic® von der Fa. Merck KGaA erhältlich. Das so pigmentierte Kunststoffgranulat wird mittels einer Spritzgießmaschine zu Formteilen spritzgegossen. Das einzelne Formteil zeigt ebenfalls einen deutlich gröberen, strukturierteren Perlglanz, als von dem verwendeten Pigment aufgrund seiner Teilchengröße zu erwarten ist. Dieser Perlglanz erweckt den visuellen Eindruck eines Glitzereffekts.

### Beispiel 4

Es werden 983 g PP-Granulat (Stamylan® PPH10) mit 2 g Diisooctylphthalat an der Oberfläche benetzt und anschließend gut vermischt. Danach werden 5 g eines changierenden Perlglanzpigmentes bestehend aus SiO₂ als Substrat und Fe₂O₃ als Beschichtung und 5 g Hohlglaskugeln Scotchlite® K37 der 3M Company, USA zugesetzt und durch Mischen gleichmäßig auf der Oberfläche des Kunststoffgranulats verteilt. Die Perlglanzpigmente sind unter dem Markennamen Colorstream® von der Fa. Merck KGaA, Darmstadt, Bundesrepublik Deutschland erhältlich. Der Masseanteil des Perlglanzpigmentes und des Füllstoffes an dem Kunststoffteil beträgt jeweils 0,5. Das pigmentierte Kunststoffgranulat wird mittels einer Spritzgießmaschine zu Formteilen spritzgegossen. Die erhaltenen Spritzlinge zeigen ebenfalls einen deutlich gröberen, strukturierten Perlglanz, als es von diesem Pigment auf Grund seiner Teilchengröße zu erwarten ist. Der Farbübergang von blaurot nach grünlich erfolgt weicher und der Farbwechsel (Flop) erfolgt in einem breiteren Betrachtungswinkelbereich als bei Einsatz der Pigmente ohne Füllkörper.

### Vergleichsbeispiel

988 g eines PP-Granulats (unter dem Warennamen Stamylan® PPH10 von der Fa. DSM, Niederlande erhältlich) werden in einem Taumelmischer mit 2 g Diisooctylphthalat an der Oberfläche benetzt und anschließend gut vermischt. Danach werden 10 g Glanzpigment auf der Basis von TiO₂beschichteten Glimmerpigmenten der Teilchengröße 5 bis 25 µm zugegeben (Handelsprodukt Iriodin® 123 Glanzsatin der Fa. Merck KGaA, Darmstadt, Bundesrepublik Deutschland) und durch Mischen gleichmäßig auf der Oberfläche des Granulats verteilt. Dieses pigmentierte Granulat wird mittels einer Spritzgießmaschine zu Formteilen verarbeitet. Das Glanzpigment hat einen Massenanteil von 1 an dem fertigen Formteil. Die fertigen Formteile zeigen einen ihrer Teilchengröße entsprechenden guten, nicht sehr strukturierten Perlglanz.

## Patentansprüche

1. Kunststoffteil enthaltend Glanzpigmente aus überwiegend flächig ausgebildeten und ausgerichteten, metallischen oder stark lichtbrechenden Pigmentteilchen oder -plättchen und einem Füllkörper, wobei der Füllkörper aus hohlen oder kompakten Teilchen besteht, die eine weitgehend isometrische Körperform aufweisen und einen Durchmesser zwischen 10 und 200 µm besitzen.

2. Kunststoffteil nach Anspruch 1, **dadurch gekennzeichnet, dass** die Durchmesser der Füllkörper 15 bis 150 µm betragen.

3. Kunststoffteil nach Anspruch 1, **dadurch gekennzeichnet, dass** die Durchmesser der Füllkörper 20 bis 120 µm betragen.

4. Kunststoffteil nach Anspruch 1, **dadurch gekennzeichnet, dass** es Glanzpigmente aus der Gruppe der Perlglanzpigmente auf Basis von mit Metalloxiden, insbesondere Titandioxid und/oder Eisenoxid, beschichteten Glimmer- und Metallpigmenten und/oder goniochromatische Glanzpigmente auf der Basis von mehrfach beschichteten Eisenoxidplättchen enthält.

5. Kunststoffteil nach Anspruch 4, **dadurch gekennzeichnet, dass** es Glanzpigmente auf der Grundlage von Titandioxid-Glimmerpigmenten, auf SiO₂ Plättchen aufgebauten TiO₂ und/oder Fe₂O₃haltigen Perlglanzpigmenten, auf Al₂O₃ aufgebauten TiO₂.haltigen silberfarbenen Perlglanzpigmenten enthält.

6. Kunststoffteil nach Anspruch 1, **dadurch gekennzeichnet, dass** der Masseanteil des Füllkörpers 0,2 bis 10 % an der Gesamtmasse des Kunststoffteils ausmacht.

7. Kunststoffteil nach Anspruch 6, **dadurch gekennzeichnet, dass** der Masseanteil des Füllkörpers 0,5 bis 5 % an der Gesamtmasse des Kunststoffteiles hat.

8. Kunststoffteil nach Anspruch 1, **dadurch gekennzeichnet, dass** der Füllkörper die Gestalt von Glas- oder Hohlglaskugeln mit einem Durchmesser zwischen 20 und 110 µm hat.

9. Kunststoffkörper nach Anspruch 1, **dadurch gekennzeichnet, dass** der Füllkörper die Gestalt von Hohlglaskugeln mit einem Durchmesser zwischen 20 und 80 µm hat.
